Europäisches Patentamt

European Patent Office

Office européen des brevets

(19)

(11) Numéro de publication: **0 428 431 A1**

# DEMANDE DE BREVET EUROPEEN

(21) Numéro de dépôt: 90403106.9

(22) Date de dépôt: 02.11.90

(51) Int. Cl.⁵: **C04B 14/20**, C04B 28/02,
//(C04B28/02,14:06,14:10,14:20,
24:26,24:38)

(30) Priorité: 13.11.89 FR 8914866

(43) Date de publication de la demande:
22.05.91 Bulletin 91/21

(84) Etats contractants désignés:
AT BE CH DE DK ES FR GB GR IT LI LU NL SE

(71) Demandeur: SOCIETE ANONYME DITE:
PROLIFIX
111 Avenue Victor Hugo
F-93300 Aubervilliers(FR)

(72) Inventeur: Rausz, Michel
6 rue Albert Camus
F-45330 Malesherbes(FR)
Inventeur: Bonnet, François
7 rue Alix de la Tour du Pin
F-45300 Pithiviers(FR)

(74) Mandataire: Hirsch, Marc-Roger et al
Cabinet Hirsch 34 rue de Bassano
F-75008 Paris(FR)

(54) **Mortier pour projection.**

(57) La présente invention a pour objet des mortiers ou microbétons.

Elle est caractérisé en ce que dans leur composition entrent notamment les constituants suivants: 17 à 25% de ciment, 60 à 70% de sables siliceux de granulométrie comprise entre 0,1 et 2,0mm, 1 à 3% de vermiculite expansée dont 95% en volume des particules ont un diamètre inférieur à 1,0 mm, 0 à 0,4% d'argile, de préférence de type bentonite, et 0,06 à 0,30% de divers agents organiques.

Elle se rapporte à des mortiers pour projection.

EP 0 428 431 A1

## MORTIER POUR PROJECTION

La présente invention a pour objet des mortiers et microbétons à prise rapide et susceptibles d'être appliqués par projection. Elle se rapporte en outre aux mortiers et microbétons ainsi obtenus.

On sait que la Société Lafarge Coppée au groupe de laquelle la présente demanderesse appartient a effectué de nombreuses recherches et développements relatifs à l'obtention de tels mortiers et microbétons, recherches qui entre autres ont conduit au brevet français n° 76 34 248 déposé le 15 NOVEMBRE 1976.

Les mortiers et microbétons décrits dans ce brevet français 76 34 248 présentent des temps de prise courts pratiquement analogues à ceux du liant de départ, et par ailleurs, ils sont parfaitement adaptés à la projection mécanique en pâte humide aussi bien qu'à l'application à la truelle sur de fortes épaisseurs, sans précautions particulières, en une seule passe, aussi bien sur des supports inclinés que sur des supports verticaux.

Ces mortiers et microbétons ont été avec avantage employés pour la réalisation de voiles minces par projection mécanique en une seule passe et c'est là un avantage inattendu, parfaitement imprévisible et de grand intérêt; en effet, ces mortiers et microbétons permettent la réalisation de systèmes de construction rapide permettant une grande simplicité de montage et une grande économie de moyens, et entraînant donc un important gain de main d'oeuvre et de temps par rapport aux techniques traditionnelles. Ces types de produits non seulement sont en soi d'un grand intérêt technique et économique, mais encore, la technique de projection en pâte humide à laquelle ils se prêtent est plus aisée à mettre en oeuvre que ne le sont les techniques de projection sèche (gunitage) classiquement employées.

Une des caractéristiques les plus intéressantes des mortiers et microbétons connus de ce brevet français 76 34 248 réside dans la possibilité d'appliquer des couches épaisses en une seule passe aussi bien sur des supports inclinés que sur des supports verticaux. Ainsi, sur supports verticaux, des épaisseurs de 3 à 5 cm sont aisément obtenues et sur des supports horizontaux (plafonds par exemple), on peut obtenir par projection des couches de 2 cm d'épaisseur. On peut, par projection mécanique en une seule passe, réaliser à partir de es bétons ou mortiers des voiles minces de 3 à 6 cm d'épaisseur.

En fait, l'avantage des mortiers et microbétons selon ce brevet français 76 34 248 est de permettre la mise en oeuvre le techniques de projection en une seule passe qui conduit à les systèmes de construction en des temps très courts se contentant de montages simples (treillis) et d'une main l'oeuvre économique, conduisant à des économies de temps, de main d'oeuvre et de moyens.

La présente invention se rapporte à un mortier ou à un microbéton encore amélioré par rapport aux mortiers et microbétons décrits dans le brevet français 76 34 248 dans la mesure où leur thixotropie est encore améliorée de sorte que les mortiers et microbétons selon l'invention puissent être appliqués manuellement ou mécaniquement, en une seule passe, par couches d'épaisseur pouvant aller jusqu'à 15 cm.

En fait, la présente invention a pour objet des mortiers ou microbétons dans la composition desquels entrent notamment les constituants suivants exprimés en proportions pondérales: 17 à 25% de ciment, 60 à 70% de sables siliceux de granulométrie comprise entre 0,1 et 4,0 mm, 1 à 3% de vermiculite expansée dont 95% en volume des particules sont constitués, en fin de fabrication d'une ou plusieurs lamelles et ont des dimensions inférieures à 1,0 mm, 0 à 0,4% d'argile, de préférence de type bentonite, et 0,06 à 0,30% de divers agents organiques.

Selon une forme d'exécution desdits mortiers en microbétons selon l'invention, les agents organiques consistent en 0,01 à 0,05% d'éther cellulosique. De préférence cet éther cellulosique présente une basse viscosité et consiste plus particulièrement en l'un des éthers vendus sous les dénominations commerciales de Tylose MH 2000 xp commercialisé par la Société Hoeschst ou Methocel 228 commercialisé par la Société Dow Chemical.

Selon une autre forme d'exécution de l'invention, les agents organiques consistent en outre en alcools polyvinyliques à taux d'hydrolyse inférieur à 90% et de viscosité inférieure à 20mPa.s. De préférence, ces alcools sont ceux vendus sous la marque MOWIOL 18.88 commercialisée par la Société Hoechst.

En fait, les éthers cellulosiques conjointement avec les alcools polyvinyliques et, dans le cas où ces mortiers doivent être transportés dans les longs tuyaux de la machine à projeter, l'argile du type bentonite, facilitent l'écoulement du produit en diminuant sensiblement la pression d'application. Ces composant contribuent également à améliorer la thixotropie des produits.

Selon une autre forme encore d'exécution de l'invention, entrent également dans la composition desdits mortiers ou microbétons des composés minéraux tels que fillers calcaires, chaux aérienne, stéarate de magnésie et autres en une proportion totale comprise entre 3,0% et 11,1%.

Selon une autre forme encore d'exécution de l'invention, le ciment est en partie remplacé par des cendres volantes dans des proportions pondérales qui sont telles que:
- pour remplacer une partie en poids de ciment, on introduit deux parties de cendres volantes,
- la quantité totale de chaux et de ciment dans la composition n'est pas inférieure au tiers de la quantité de cendres volantes,
- la somme du pourcentage pondéral de ciment et de la moitié du pourcentage pondéral de cendres volantes dans la composition est au moins égale à 17%.

La composition selon cette dernière forme d'exécution est économique et en outre possède les qualités et caractéristiques de l'invention.

La présente invention a également pour objet un procédé de préparation desdits mortiers ou microbétons qui consiste à mélanger dans un broyeur ou malaxeur l'ensemble des constituants de formation desdits mortiers ou microbétons et à poursuivre le broyage pendant une durée suffisante pour que la vermiculite expansée subisse une transformation physique, telle que 95% en volume des particules de vermiculite soient constitués d'une ou de plusieurs lamelles passant à travers un tamis de 1 mm.

La vermiculite expansée comme constituant de mortiers, d'enduits ou microbétons est classiquement utilisée pour alléger lesdits produits. En fait, l'allègement étant fonction des dimensions des particules de vermiculite, la vermiculite n'est dans les procédés connus introduite dans le mélangeur qu'en fin de mélange des différents constituants de ces mortiers ou microbétons pour éviter au maximum le broyage de la vermiculite, car lorsqu'elle est broyée, est supprimé l'avantage de l'allègement recherché. Les mortiers ou microbétons comprenant de la vermiculite expansée non broyée ont pour principaux inconvénients de ne passer qu'avec difficulté dans les tuyaux de la machine à projeter et s'arrachent à l'arasage (ou "dressage") réalisé en général avec une règle, à moins que des proportions relativement importantes d'agents organiques ne soient ajoutées.

Par le fait du broyage de la vermiculite dans la préparation des mortiers, leur passage dans les tuyaux de la machine à projeter est facile d'une part et permet de réduire la proportion d'agents organiques que requièrent habituellement les mortiers contenant de la vermiculite non broyée. Dans les essais réalisés avec une machine à projeter à piston, type P13 DMR avec pompe KA de la société Putzmeister, le produit de la qualité applicable jusqu'à 15 cm d'épaisseur a pu passer sans problème dans 93,3 m linéaires de tuyaux (constitués de 80 m linéaires de tuyau de 50 mm de diamètre et 13,3 m linéaires de 35 de diamètre). Le redémarrage de l'application n'a pas posé de problèmes après 30mn d'arrêt de l'application.

De plus, et également de façon surprenante les mortiers ou microbétons obtenus présentent des propriétés mécaniques, telles dureté, extrêmement appréciable.

D'autres buts et avantages et caractéristiques de la présente invention apparaîtront à la lecture de la description suivante et des exemples donnés à titre non limitatif.

Exemples 1 à 3

On prépare trois mortiers A, B, C à partir des constituants indiqués dans le tableau I ci-dessous, la vermiculite employée ayant avant malaxage une granulométrie telle que les dimensions de 95% en volume des particules soit inférieure à 1,6 mm.

TABLEAU I

| COMPOSANTS | PRODUIT | | | | | | | |
|---|---|---|---|---|---|---|---|---|
| | A | | B | | C | | D | |
| | kg | % | kg | % | kg | % | kg | % |
| CPA 55 | 300 | 20,040 | 300 | 19,960 | 325 | 21,580 | 100 | 6,557 |
| Chaux aérienne | 45 | 3,006 | 45 | 2,994 | 45 | 2,988 | 50 | 3,279 |
| Fillers calcaires | 100 | 6,680 | 100 | 6,653 | 100 | 6,640 | - | - |
| Sable siliceux 0,1 à 2 mm | - | - | 1030 | 68,530 | 990 | 65,738 | - | - |
| Sable siliceux 0,1 à 3 mm | - | - | - | - | - | - | 1000 | 65,574 |
| Sable siliceux 0,1 à 4 mm | 1030 | 68,805 | - | - | - | - | - | - |
| Cendres volantes | - | - | - | - | - | - | 350 | 22,951 |
| Vermiculite SF | 18 | 1,202 | 18 | 1,198 | 36 | 2,390 | 22,5 | 1,475 |
| Mowiol 18.88 | 2,0 | 0,134 | 2,0 | 0,133 | 2,0 | 0,133 | 2,0 | 0,131 |
| Tylose TH 2000 xp | 0,5 | 0,033 | 0,5 | 0,033 | 0,5 | 0,033 | 0,5 | 0,033 |
| Clarsol FB-6-H | - | - | 6,0 | 0,399 | 6,0 | 0,398 | - | - |
| Stéarate de magnésie | 1,5 | 0,100 | 1,5 | 0,100 | 1,5 | 0,100 | - | - |
| TOTAL | 1497 | | 1503 | | 1506 | | 1525 | |

Ces composants dans les proportions indiquées ci-dessus, sont introduits dans un malaxeur à arbre horizontal doté de pales et, éventuellement, de couteaux latéraux.

Le temps de malaxage, avec action des couteaux latéraux, dans un malaxeur Lodige type FKM 2000 D, pour les trois produits, est de 2 minutes 30 secondes pour obtenir la thixotropie permettant l'application des épaisseurs indiquées ci-après, dans le tableau II.

TABLEAU II

| CARACTERISTIQUES | PRODUIT | | | |
|---|---|---|---|---|
| | A | B | C | D |
| Taux de gâchage, 1 d'eau/sac de 25 kg | 4 - 4,25 | 4,5 - 4,75 | 5,0 - 5,5 | 4,5 - 4,75 |
| Epaisseur d'application, manuelle ou mécanique, sur support non lisse, en cm jusqu'à | 5 | 8 | 15 | 8 |
| Densité du produit en poudre | 1,25 ± 0,04 | 1,23 ± 0,04 | 1,25 ± 0,03 | 1,32 ± 0,05 |
| Densité du produit appliqué séché, mesurée sur applications: | | | | |
| - manuelles | 1,63 | à | 1,70 | 1,68 à 1,73 |
| - mécaniques | 1,66 | à | 1,76 | 1,71 ± 1,80 |
| Module d'élasticité des produits daN/cm$^2$ | 89 000 | à | 103 000 | 60 000 à 92 000 |
| Résistances sur produits appliqués | | | | |
| - traction par flexion daN/cm$^2$ | 21 | ± | 2 | 17 ± 2 |
| - compression daN/cm$^2$ | 73 | ± | 6 | 64 ± 7 |
| Résistances sur éprouvettes 4 x 4 x 16 cm | | | | |
| - traction par flexion | 31 | ± | 5 | 25 ± 5 |
| - compression | 91 | ± | 5 | 79 ± 5 |

Le broyage ou malaxage est effectué sur l'ensemble du mélange pendant un temps suffisant pour que la granulométrie de la vermiculite (initialement pour 95% en volume inférieur à 1,6 mm) soit après ce broyage ou malaxage pour 95% en volume inférieur à 1,0 mm.

En fait, les mortiers ou microbétons ainsi préparés permettent par application manuelle ou mécanique, les travaux suivants:

- un dressage rapide des supports à renouveler, qui demande l'application du mortier en épaisseur fortement variable.

Ce dressage, sur les supports composés de matériaux divers (brique pleine ou creuse, béton, parpaings, plâtre, torchis etc.) peut être effectué sur une grille métallique, fixée de façon suffisamment solide sur la surface à appliquer.

- tous les types de moulures à réaliser directement sur chantier:

. par le façonnage direct (calibre adapté appliqué sur le produit frais d'épaisseur et forme initiales adéquates)

. par la découpe dans le produit raidi moyennant des ciseaux ou un calibre coupant. Les produits sont aptes à ce type d'opération entre 1 et 2 heures après application (selon les conditions atmosphériques).

Les moulures peuvent être réalisées en plein ou en évidé. Dans ce dernier cas, l'application a lieu sur un support en grille métallique formée de façon adaptée et fixée d'avance.

- les rochers artificiels avec la facilité de formation en dimensions et en relief, le support étant une grille métallique, par exemple: lattis 0.18 fabriqué par la Société le Métal Déployé S.A., fixée sur une structure porteuse (métallique, en bois ou autres).

La thixotropie est fondamentalement fonction des proportions de vermiculite, d'agents organiques employés et d'argile de type bentonite et l'homme de l'art saura en fonction de ses connaissances passer sur leurs proportions requises pour obtenir la thixotropie la plus adéquate aux conditions d'emploi.

**Revendications**

1.- Mortiers ou microbétons, caractérisés en ce que dans leur composition entrent notamment les constituants suivants en pourcentages pondéraux: 17 à 25% de ciment, 60 à 70% de sables siliceux de granulométrie comprise entre 0,1 et 4,0 mm, 1 à 3% de vermiculite expansée dont 95% en volume des particules sont constitués d'une ou de plusieurs lamelles et ont des dimensions inférieures à 1,0 mm, 0 à 0,4% d'argile, de préférence de type bentonite, et 0,06 à 0,30% de divers agents organiques.

2.- Mortiers ou microbétons selon la revendication 1, caractérisés en ce que les agents organiques consistent en 0,01 à 0,05% d'éther cellulosique.

3.- Mortiers ou microbétons selon la revendication 2, caractérisés en ce que cet éther cellulosique présente une basse viscosité et consiste plus particulièrement en l'un des éthers vendus sous les dénominations commerciales de Tylose MH 2000 xp commercialisé par la Société Hoeschst ou Methocel 228 commercialisé par la Société Dow Chemical.

4.- Mortiers ou microbétons selon une quelconque des revendications 1 à 3, caractérisés en ce que les agents organiques consistent en outre en alcools polyvinyliques à taux d'hydrolyse inférieur à 90% et de viscosité inférieure à 20mPa.s.

5.- Mortiers ou microbétons selon la revendication 4, caractérisés en ce que ces alcools sont ceux vendus sous la marque MOWIOL 18.88 commercialisée par la Société Hoechst.

6.- Mortiers ou microbétons selon une quelconque des revendications 1 à 5, caractérisés en ce qu'entrent également dans la composition desdits mortiers ou microbétons des composés minéraux tels que fillers calcaires, chaux aérienne, stéarate de magnésie et autres en une proportion totale comprise entre 3,0% et 11,1%.

7.- Mortiers ou microbétons selon une quelconque des revendications 1 à 6, caractérisés en ce que le ciment est en partie remplacé par des cendres volantes dans des proportions pondérales qui sont telles que:

- pour remplacer une partie en poids de ciment, on introduit deux parties de cendres volantes,
- la quantité totale de chaux et de ciment dans la composition n'est pas inférieure au tiers de la quantité de cendres volantes,
- la somme du pourcentage pondéral de ciment et de la moitié du pourcentage pondéral de cendres volantes dans la composition est au moins égale à 17%.

8.- Procédé de préparation desdits mortiers ou microbétons selon une quelconque des revendications 1 à 7, caractérisé en ce qu'il consiste à mélanger dans un broyeur ou malaxeur l'ensemble des constituants de formation desdits mortiers ou microbétons et à poursuivre le broyage pendant une durée suffisante pour que la vermiculite expansée subisse une transformation physique telle que 95% en volume des particules de vermiculite soient constitués d'une ou de plusieurs lamelles, passant à travers d'un tamis de 1,0 mm.

# RAPPORT DE RECHERCHE
# EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 370 706 (LAFARGE) <br> * Revendications 1,5,6,8,9 * <br> — — — | 1-3,6 | C 04 <br> B 14/20 <br> C 04 B 28/02 // |
| Y | DE-A-3 150 701 (H. KRAMER) <br> * Revendications 1,2,10,11 * <br> — — — | 1-3,6 | (C 04 B 28/02 <br> C 04 B 14:06 <br> C 04 B 14:10 |
| A | FR-A-2 539 788 (C.G.E.) <br> * Revendication 1; page 2, lignes 16-17 * <br> — — — | 1,2,4,6 | C 04 B 14:20 <br> C 04 B 24:26 <br> C 04 |
| A | EP-A-0 120 800 (SOC. ANC. ET ABL. LOUDE FRERES) <br> * Résumé; revendication 3 * <br> — — — | 1,6 | B 24:38 ) |
| A | US-A-2 993 016 (G. SUCETTE) <br> * Revendications 1,4 * <br> — — — | 1,2 | |
| A | GB-A-8 953 98 (ICI) <br> * Page 1, lignes 68-82 * <br> — — — | 8 | |
| A | GB-A-2 144 112 (HAZAMA-GUMI) <br> * Résumé * <br> — — — | 2,4 | |
| A | CHEMICAL ABSTRACTS, vol. 93, no. 2, 14 juillet 1980, page 273, résumé no. 12425a, Columbus, Ohio, US; & JP-A-80 15 970 (K. GOTO) 04-02-1980 <br> — — — | 1,4 | **DOMAINES TECHNIQUES RECHERCHES (Int. Cl.5)** <br><br> C 04 B 28 <br> C 04 B 14 |
| A | WO-A-8 906 641 (H. WILKINSON) <br> * Revendications 1,7,10,21 * <br> — — — | 1,7 | C 04 B 40 <br> C 04 B <br> 20 |
| A | EP-A-0 299 351 (HERCULES INC.) <br> * Résumé * <br> — — — | 1 | |
| A | DE-A-1 646 577 (W. HOLZWARTH) <br> — — — — — | | |

Le présent rapport de recherche a été établi pour toutes les revendications

| Lieu de la recherche | Date d'achèvement de la recherche | Examinateur |
|---|---|---|
| La Haye | 01 février 91 | DAELEMAN P.C.A. |